# EUROPÄISCHE PATENTANMELDUNG

(11) **EP 0 844 749 A2**
(43) Veröffentlichungstag der Anmeldung: **27.05.1998**
(21) Anmeldenummer: 97402692.4
(22) Anmeldetag: 10.11.1997
(51) Int. Cl.: H04B 10/158

(54) **Schaltungsanordnung zur Messung der empfangenen optischen Leistung**

(30) Priorität: 20.11.1996 DE 19648022
(71) Anmelder: ALCATEL ALSTHOM COMPAGNIE GENERALE D'ELECTRICITE, 75008 Paris (FR)
(72) Erfinder: Ocker, Johannes, Ing. (grad.), 30453 Hannover (DE)
(74) Vertreter: Döring, Roger, Dipl.-Ing.

(57) **Zusammenfassung**

Es wird eine Schaltungsanordnung zur Übertragung optischer Signale über einen Lichtwellenleiter (1) angegeben, welcher am Ende einer Übertragungsstrecke an einen zu einer elektronischen Empfangsschaltung gehörenden optischen Empfänger (2) angeschlossen ist. Zur einfachen Messung der Lichtleistung ist in den Strompfad des Empfängers (2) ein Stromspiegel (5) mit einem Zweig eingeschaltet, an dessen zweiten Zweig eine Schaltung (6,7) zur Messung des durch diesen Zweig fließenden Stromes (Iₘ) angeschlossen ist.

## Beschreibung

Die Erfindung bezieht sich auf eine Schaltungsanordnung zur Übertragung optischer Signale über einen Lichtwellenleiter, welcher am Ende einer Übertragungsstrecke an einen zu einer elektronischen Empfangsschaltung gehörenden optischen Empfänger angeschlossen ist (DE 32 18 439 C2).

"Optische Empfänger" sind beispielweise Photodioden oder Phototransistoren. Bei der bekannten Schaltungsanordnung nach der DE 32 18 439 C2 wird als Empfänger beispielsweise eine Avalanche-Diode eingesetzt. Die Empfänger dienen im Übertragungsweg der optischen Signale als optisch/elektrische Wandler. Die empfangenen optischen Signale werden zur Weiterverarbeitung in elektrische Signale umgesetzt. Für diese Weiterverarbeitung ist der Empfang ausreichend "starker" optischer Signale erforderlich. Das bedeutet, daß die optischen Signale einen ausreichenden Pegel haben müssen, damit ein elektrisches Signal mit einem ausreichenden Pegel erzeugt werden kann. Für die Weiterverarbeitung der Signale und auch für die Beurteilung der Funktionsfähigkeit einer Schaltungsanordnung ist daher die Erfassung des Pegels der Signale an den Empfängern von Bedeutung. Der DE 32 18 439 C2 sind dazu keine Hinweise zu entnehmen. Es kommt hinzu, daß eine direkte Messung des Signalpegels an den Empfängern nicht möglich ist. Eine weitere Schwierigkeit besteht darin, daß die Empfänger mit einer relativ hohen Spannung von beispielweise 50 V betrieben werden. Die in den elektronischen Schaltungen eingesetzten Bauelemente hingegen haben wesentlich niedrigere Betriebsspannungen von beispielsweise 5 V. Sie können also direkt nicht zu einer Strommessung im Stromkreis des jeweiligen Empfängers verwendet werden.

Der Erfindung liegt die Aufgabe zugrunde, die eingangs geschilderte Schaltungsanordnung so weiterzubilden, daß eine einfache Messung des Signalpegels am optischen Empfänger möglich ist.

Diese Aufgabe wird gemäß der Erfindung dadurch gelöst, daß in den Strompfad des Empfängers ein Stromspiegel mit einem Zweig eingeschaltet ist, an dessen zweiten Zweig eine Schaltung zur Messung des durch diesen Zweig fließenden Stromes angeschlossen ist.

Durch den an sich bekannten, beispielweise im DE-Buch von Tietze/Schenk, "Halbleiter-Schaltungstechnik", 7. Auflage, 1985 aufden Seiten 62 bis 64 beschriebenen Stromspiegel wird der im Stromkreis des Empfängers fließende Strom proportional in den zweiten Zweig "gespiegelt". Ein Teilstrom fließt im einen Zweig des Stromspiegels wie bisher über den optischen Empfänger. Der andere Teilstrom wird einer Meßschaltung zugeführt. Das kann in einfachster Ausführungsform ein in den Strompfad dieses Zweiges eingeschalteter ohm'scher Widerstand sein. Es kann aber auch ein Strom/Spannungswandler verwendet werden. In beiden Fällen ist die gemessene Gleichspannung der Amplitude des Empfangssignals am Empfänger proportional. Es wird also eine der Lichtleistung am Empfänger proportionale Spannung gewonnen, die für die weitere Auswertung verwendet werden kann. Dazu kann die gemessene Lichtleistung beispielweise mittels eines Voltmeters ständig angezeigt werden. Sie kann aber auch einem Analog-Digitalwandler zugeführt werden. Dann ist eine Weiterverarbeitung des gewonnenen Spannungswerts mit einem Mikroprozessor bzw. mit einem Digitalrechner möglich. Es können damit die entsprechenden Lichtpegelwerte errechnet und zur Anzeige gebracht werden. Bei einer Abweichung der Werte von vorgegebenen Grenzen kann Alarm ausgelöst bzw. signalisiert werden. Maßnahmen zur Beseitigung des Fehlers können eingeleitet werden.

Ausführungsbeispiele der Erfindung sind in den Zeichnungen dargestellt.

Es zeigen:

Fig. 1 und 2 zwei unterschiedliche Schaltungsanordnungen nach der Erfindung.

Fig. 3 eine mögliche Schaltung für einen Strom/Spannungswandler.

In einem Lichtwellenleiter 1 geführte optische Signale treffen auf einen optischen Empfänger 2 - im folgenden der Einfachheit halber "Diode 2" genannt. Im Stromkreis der Diode 2 liegt beispielweise ein Verstärker 3. Die Diode 2 wird aus einer Spannungsquelle 4 gespeist, die beispielsweise 50 V mit einem Strom I liefert.

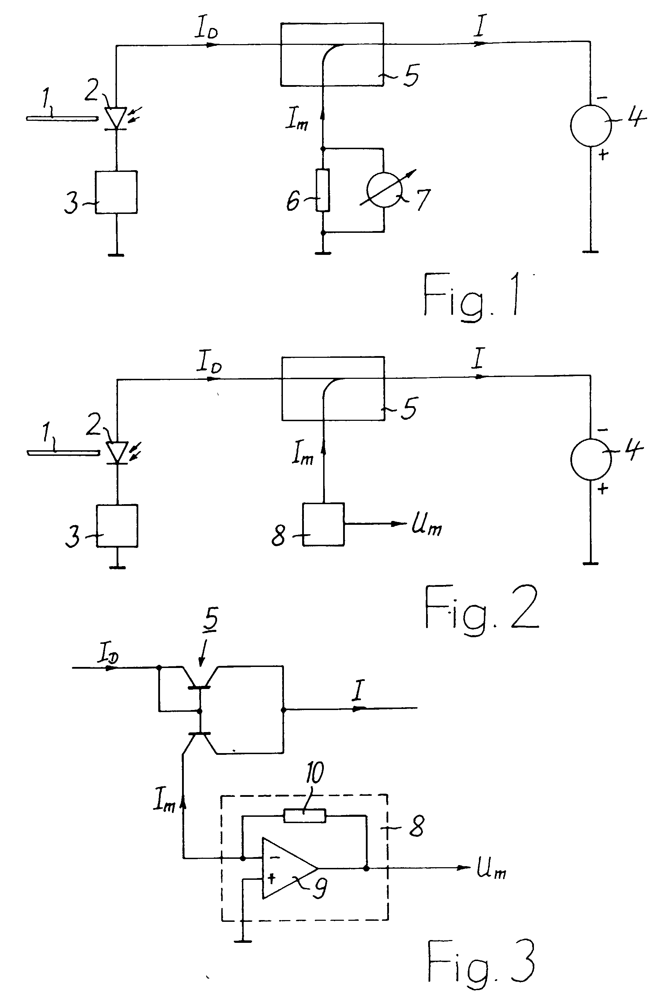

Zwischen Diode 2 und Spannungsquelle 4 ist ein Stromspiegel 5 eingeschaltet, der zwei Zweige aufweist. Durch den einen Zweig, an den die Diode 2 angeschlossen ist, fließt ein Strom I_{D}. Im zweiten Zweig des Stromspiegels 5 fließt ein Strom Iₘ, der dem Strom I_{D} proportional ist. Beide Ströme I_{D} und Iₘ können gleich groß sein, wenn beispielweise ein Wilson-Stromspiegel eingesetzt wird. In dem zweiten Zweig des Stromspiegels 5 können Strom bzw. Spannung mit niedrigerem Potential gemessen werden, so daß bei elektronischen Schaltungen übliche Bauelemente eingesetzt werden können. Gemäß Fig. 1 liegt im zweiten Zweig des Stromspiegels 5 ein ohm'scher Widerstand 6, an den ein Spannungsmesser 7 angeschlossen ist. Die von demselben gemessene Spannung Uₘ ist dem Strom Iₘ und damit dem Lichtsignalpegel an der Diode 2 bzw. der Lichtleistung derselben proportional.

Die Spannung Uₘ kann auch mittels eines Strom/Spannungswandler 8 gemessen werden, der in Fig. 2 schematisch angedeutet ist. Als Strom/Spannungswandler 8 kann eine aus Fig. 3 ersichtliche stromgesteuerte Spannungsquelle eingesetzt werden. Sie weist einen Operationsverstärker 9 auf, dessen einem Eingang der Strom Iₘ zugeführt wird. Dieser Eingang ist über einen ohm'schen Widerstand 10 mit dem Ausgang verbunden, an dem die Spannung Uₘ ansteht.

Die Spannung Uₘ ist das Maß für die Lichtleistung an der Diode 2. Sie wird zu deren Überwachung verwendet. Bei einer Abweichung von vorgegebenen Werten kann ein Alarm ausgelöst oder signalisiert werden. Fehler auf der Übertragungsstrecke, die zu einer verminderten Lichtleistung an der Diode 2 führen, können also direkt festgestellt und schnellstens behoben werden.

## Patentansprüche

1. Schaltungsanordnung zur Übertragung optischer Signale über einen Lichtwellenleiter, welcher am Ende einer Übertragungsstrecke an einen zu einer elektronischen Empfangsschaltung gehörenden optischen Empfänger angeschlossen ist, dadurch gekennzeichnet, daß in den Strompfad des Empfängers (2) ein Stromspiegel (5) mit einem Zweig eingeschaltet ist, an dessen zweiten Zweig eine Schaltung zur Messung des durch diesen Zweig fließenden Stromes angeschlossen ist.

2. Schaltungsanordnung nach Anspruch 1, dadurch gekennzeichnet, daß ein Stromspiegel (5) verwendet wird, dessen in den beiden Zweigen fließende Ströme gleich groß sind.

3. Schaltungsanordnung nach Anspruch 1 oder 2, dadurch gekennzeichnet, daß in den zweiten Zweig des Stromspiegels (5) ein ohm'scher Widerstand (6) eingeschaltet ist.

4. Schaltungsanordnung nach Anspruch 1 oder 2, dadurch gekennzeichnet, daß in den zweiten Zweig des Stromspiegels (5) ein Strom/Spannungswandler (8) eingeschaltet ist.
